# EUROPEAN PATENT APPLICATION

(11) **EP 1 947 368 A1**
(43) Date of publication of application: **23.07.2008**
(21) Application number: 06811690.4
(22) Date of filing: 12.10.2006
(51) Int. Cl.: F16G 5/18, F16H 9/24

(54) **POWER TRANSMISSION CHAIN AND POWER TRANSMISSION DEVICE**

(30) Priority: 14.10.2005 JP 2005301031
(71) Applicant: JTEKT Corporation, Osaka-shi Osaka 542-8502 (JP)
(72) Inventor: TADA, Seiji, Osaka 542-8502 (JP); KAMAMOTO, Shigeo, Osaka 542-8502 (JP)
(74) Representative: Steil, Christian
(86) International application number: PCT/JP2006/320402
(87) International publication number: WO 2007/043618

(57) **Abstract**

A power transmission chain (1) includes a plurality of link plates (2, 2A, 2B, 2C, 2D, 2E, 2F, 2G, 2H, 2J) aligned along the chain travel direction (X1) and a plurality of connection members (50, 3) connecting these link plates (2, 2A, 2B, 2C, 2D, 2E, 2F, 2G, 2H, 2J) to each other. When the link plates (2, 2A, 2B, 2C, 2D, 2E, 2F, 2G, 2H, 2J) are viewed along the chain width direction (W1), the link plates (2, 2A, 2B, 2C, 2D, 2E, 2F, 2G, 2H, 2J) each include discrimination portion (22, 22A, 22B, 22C, 22D, 22E, 22F, 22G, 22H, 22J, 22K) for discriminating the chain travel direction (X1).

## Description

### Technical Field

The present invention relates to a power transmission chain and a power transmission device.

### Background Art

As an endless power transmission chain used in a power transmission device, such as a pulley-type continuously variable transmission (CVT) in an automobile, there is a type including plural link plates aligned in the chain travel direction. Respective link plates adjacent to each other in the chain travel direction are coupled to each other with a pair of pins that are allowed to undergo rolling motions with respect to each other (see, for example, Patent Documents 1 and 2).
Patent Document 1: Japanese Unexamined Patent Publication No. 2005-226831
Patent Document 2: Japanese Unexamined Patent Publication No. 08-312725

### Disclosure of the Invention

### Problems to be Solved by the Invention

The link plates forming the power transmission chains disclosed in Patent Documents 1 and 2 are, when viewed in the chain width direction, of a shape asymmetric with respect to the front and the rear in the chain travel direction, and the orientation of the link plates with respect to the chain travel direction is determined. Accordingly, one of the things necessary for these power transmission chains when the power transmission chains are fabricated by inserting pins through the link plates is to align the link plates in the correct orientation. In addition, because the travel direction (rotation direction) of the power transmission chain is determined, it is necessary to place the chain in the correct direction when the chain is wound around the pulleys.

The invention was devised under the circumstances described above, and has an object to provide a power transmission chain and a power transmission device with which not only can the assemble direction of the link plates be discriminated, but also the travel direction can be discriminated.

### Means for Solving the Problems

In order to achieve the above object, one likeable aspect of the invention provides a power transmission chain including plural link plates aligned in a chain travel direction, and plural coupling members that extend in a chain width direction orthogonal to the chain travel direction and couple the plural link plates one with another. When the link plates are viewed along the chain width direction, each of the link plates has a discrimination portion to discriminate the chain travel direction.

According to this aspect, by providing the discrimination portions, it is possible to discriminate the orientations of the link plates with respect to the chain travel direction. For example, when the link plates are viewed along the chain width direction, in a case where each link plate is of a shape asymmetric with respect to the front and the rear in the chain travel direction and the orientation of the link plate with respect to the chain travel direction is determined, the assemble direction of the link plates can be discriminated. It is thus possible to prevent the link plates from being assembled in a wrong orientation. In addition, it is possible to discriminate the travel direction of the power transmission chain (the rotation direction of the power transmission chain) using the discrimination portion. Thus, it is possible to prevent the power transmission chain from being wound around the pulleys or the like in a wrong direction.

### Brief Description of the Drawings

FIG. 1 is a partial broken perspective view schematically showing the configuration of a major portion of a chain-type continuously variable transmission as a power transmission device provided with a power transmission chain according to one embodiment of the invention.
FIG. 2 is an enlarged section of a major portion of a drive pulley (driven pulley) and a chain of FIG. 1.
FIG. 3 is a section of a major portion of the chain.
FIG. 4 is a section taken on line IV-IV of FIG. 3.
FIG. 5 is a section of a major portion in another embodiment of the invention.
FIG. 6 is a partial section of a major portion in still another embodiment of the invention.
FIG. 7 is a section of a major portion in still another embodiment of the invention.
FIG. 8 is a section of a major portion in still another embodiment of the invention.
FIG. 9 is a section of a major portion in still another embodiment of the invention.
FIG. 10 is a section of a major portion in still another embodiment of the invention.
FIG. 11 is a section of a major portion in still another embodiment of the invention.
FIG. 12 is a section of a major portion in still another embodiment of the invention.
FIG. 13 is a section of a major portion in still another embodiment of the invention.
FIG. 14 is a section of a major portion in still another embodiment of the invention.
FIG. 15 is a partial section of a major portion in still another embodiment of the invention.
FIG. 16 is a view of a major portion in still another embodiment of the invention when viewed along the chain width direction.
FIG. 17 is a view of a major portion in still another embodiment of the invention when viewed along the chain width direction.
FIG. 18 is a partial section of a major portion in still another embodiment of the invention.

### Best Mode for Carrying Out the Invention

Preferred embodiments of the invention will be described with reference to the accompanying drawings.

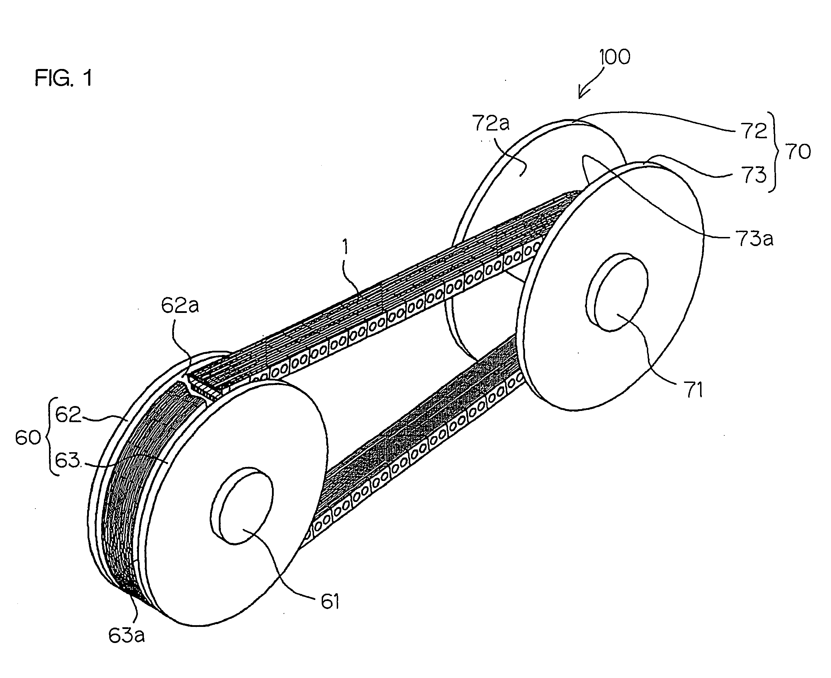

FIG. 1 is a partial broken perspective view schematically showing the configuration of a major portion of a chain-type continuously variable transmission (hereinafter, also referred to simply as the continuously variable transmission) as a power transmission device provided with a power transmission chain according to one embodiment of the invention.

Referring to FIG. 1, a continuously variable transmission 100 is mounted on a vehicle, such as an automobile. The continuously variable transmission 100 includes a drive pulley 60 made of metal (structural steel or the like) as one of a pair of pulleys, a driven pulley 70 made of metal (structural steel or the like) as the other one of a pair of pulleys, and an endless power transmission chain 1 (hereinafter, also referred to simply as the chain) wound around these pulleys 60 and 70.

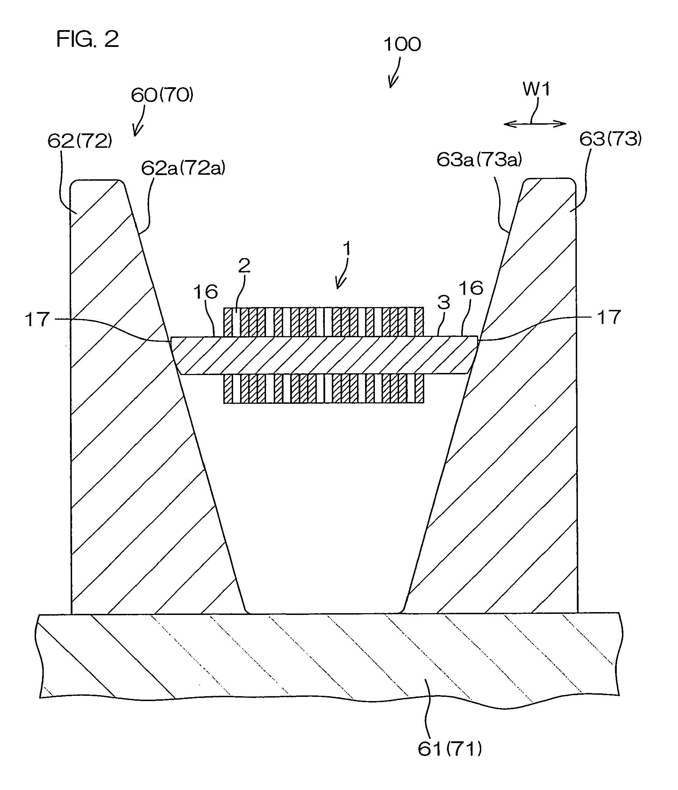

The drive pulley 60 and the driven pulley 70 are formed of variable diameter pulleys. FIG. 2 is an enlarged section of a major portion of the drive pulley 60 (driven pulley 70) and the chain 1 of FIG. 1. Referring to FIG. 1 and FIG. 2, the drive pulley 60 is attached in a together rotatable manner to an input shaft 61 that is coupled to a vehicle driving source in such a manner that power can be transmitted from the driving source. The drive pulley 60 includes a stationary sheave 62 and a movable sheave 63. The stationary sheave 62 and the movable sheave 63 have a pair of mutually opposing sheave surfaces 62a and 63a, respectively. Each of the sheave surfaces 62a and 63a includes a slope surface in the form of a circular conical surface. A groove is defined between these sheave surfaces 62a and 63a and the chain 1 is caught tightly and held in this groove.

A hydraulic actuator (not shown) to change the groove width is connected to the movable sheave 63, so that the groove width is varied at speed change by moving the movable sheave 63 in the axial direction of the input shaft 61 (right-left direction in FIG. 2) . The chain 1 is thus allowed to move in the radial direction of the input shaft 61 (top-bottom direction in FIG. 2), which makes it possible to change an effective radius of the pulley 60 with respect to the chain 1.

In FIG. 2, reference characters to denote components of the driven pulley 70 corresponding to the counterparts of the drive pulley 60 are shown in parentheses. As are shown in FIG. 1 and FIG. 2, the driven pulley 70 is attached in a together rotatable manner to an output shaft 71 that is coupled to a drive wheel (not shown) in such a manner that power can be transmitted to the drive wheel. As with the drive pulley 60, the driven pulley 70 includes a stationary sheave 73 and a movable sheave 72 respectively having a pair of mutually opposing sheave surfaces 73a and 72a each in the form of a circular conical surface to define a groove in which the chain 1 is caught tightly.

As with the movable sheave 63 of the drive pulley 60, a hydraulic actuator (not shown) is connected to the movable sheave 72 of the driven pulley 70, so that the groove width is varied at speed change by moving the movable sheave 72. It is thus possible to change an effective radius of the pulley 70 with respect to the chain 1 by moving the chain 1.

According to the configuration as described above, power is transmitted between a pair of the pulleys 60 and 70 via the chain 1.

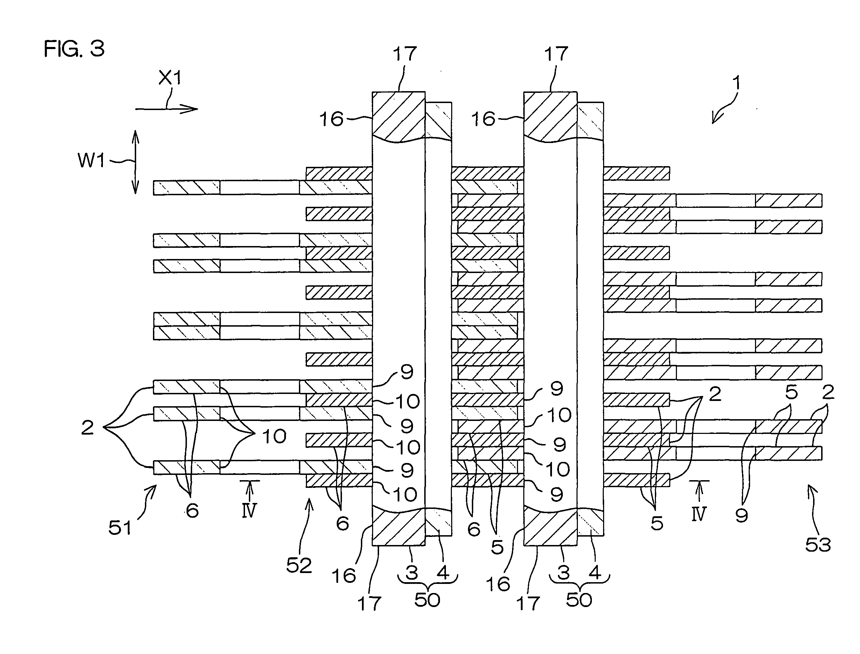

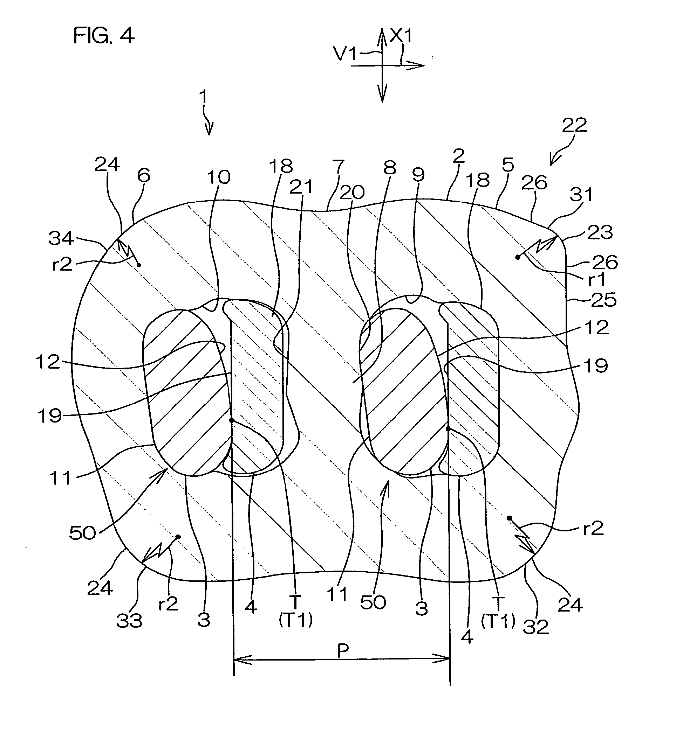

FIG. 3 is a section of a major portion of the chain 1. FIG. 4 is a section taken on line IV-IV of FIG. 3. Hereinafter, the chain 1 will be described in reference to the linear region of the chain 1. Referring to FIG. 3 and FIG. 4, the chain 1 includes plural link plates 2 and plural coupling members 50 that couple these link plates 2 in such a manner that they are allowed to bend with respect to one another.

Hereinafter, a direction along the travel direction of the chain 1 is defined as the chain travel direction X1, a direction orthogonal to the chain travel direction X1 and along the longitudinal direction of the coupling members 50 is defined as the chain width direction W1, and a direction orthogonal to both the chain travel direction X1 and the chain width direction W1 is defined as the orthogonal direction V1.

Each link plate 2 is in the form of a plate, and includes a front end portion 5 and a rear end portion 6 as a pair of end portions aligned from front to rear in the chain travel direction X1, and an intermediate portion 7 disposed between the front end portion 5 and the rear end portion 6.

The front end portion 5 and the rear end portion 6 are provided with a front through-hole 9 as a first through-hole and a rear through-hole 10 as a second through-hole, respectively. The intermediate portion 7 has a pillar portion 8 as a partition between the front through-hole 9 and the rear through-hole 10. The pillar portion 8 has a specific thickness in the chain travel direction X1. The rigidity of the link plate 2 is increased by disposing the pillar portion 8 between the front through-hole 9 and the rear through-hole 10. An outer peripheral portion 25 of each link plate 2 shapes a smooth curve, which is deemed as a shape that hardly causes stress concentration.

When the chain 1 is viewed along the chain width direction W1, the link plate 2 is of a shape asymmetric with respect to the front and the rear in the chain travel direction X1 (asymmetric with respect to the right-left direction in FIG. 4) and has the directivity. The orientation of the link 2 with respect to the chain travel direction X1 is determined.

First, second, and third link lines 51, 52, and 53 are formed using the link plates 2. To be more specific, the first link line 51, the second link 52, and the third link line 53 respectively include plural link plates 2 aligned in the chain width direction W1.

In each of the first through third link lines 51 through 53, the link plates 2 in the same link line are aligned so that all are lined up at the same position in the chain travel direction X1. The first through third link lines 51 through 53 are aligned in the chain travel direction X1.

The respective link plates 2 in the first through third link lines 51 through 53 are coupled to the corresponding link plates 2 in the first through third link lines 51 through 53 using the corresponding coupling members 50 in a relatively rotatable (bendable) manner.

To be more concrete, the front through-hole 9 made in the like plate 2 in the first link line 51 and the rear through-hole 10 made in the link plate 2 in the second link line 52 are aligned in the chain width direction W1 and correspond to each other. The link plates 2 in the first and second link lines 51 and 52 are coupled so as to be bendable with respect to each other in the chain travel direction X1 using the coupling member 50 that is inserted through these through-holes 9 and 10.

Likewise, the front through-hole 9 made in the link plate 2 in the second link line 52 and the rear through-hole 10 made in the link plate 2 in the third link line 53 are aligned in the chain width direction W1 and correspond to each other. The link plates 2 in the second and third link lines 52 and 53 are coupled so as to be bendable with respect to each other in the chain travel direction X1 with the coupling member 50 that is inserted through these through-holes 9 and 10.

In FIG. 3, the first through third link lines 51 through 53 are shown one for each. However, the first through third link lines 51 through 53 are disposed repetitively along the chain travel direction X1. The respective link plates 2 adjacent to each other in the chain travel direction X1 are successively coupled to each other with the corresponding coupling members 50 to form the endless chain 1.

Referring to FIG. 3 and FIG. 4, each coupling member 50 includes first and second pins 3 and 4, and these first and second pins 3 and 4 make a pair. The first pin 3 comes into contact with the second pin 4, which is the counterpart of the pair, in a contact state including at least one of rolling contact and sliding contact in association with bending of the link plates 2 with respect to each other.

The first pin 3 is a first power transmission member that extends long in the chain width direction W1. The peripheral surface 11 of the first pin 3 extends in parallel with the chain width direction W1.

The peripheral surface 11 is formed as a smooth surface and has a front portion 12 as a counter portion facing frontward in the chain travel direction X1. The front portion 12 opposes the second pin 4 and comes into contact with a rear portion 19 of the second pin 4 described below at a contact portion T (a contact point when viewed along the chain width direction W1). The contact portion T is in the form of a long line in the chain width direction W and it looks like a point when viewed along the chain width direction W1.

A pair of end portions 16 of the first pin 3 with respect to the longitudinal direction (chain width direction W1) respectively protrude in the chain width direction W1 from the link plates 2 disposed at a pair of end areas in the chain width direction W1. The pair of end portions 16 are respectively provided with end faces 17 as a pair of power transmission portions.

Referring to FIG. 2, these end faces 17 are brought into frictional contact (engagement) with the corresponding sheave surfaces 62a and 63a and sheave surfaces 72a and 73a of the pulleys 60 and 70, respectively.

The first pin 3 is pinched between the corresponding sheave surfaces 62a and 63a or sheave surfaces 72a and 73a. This configuration allows power to be transmitted between the first pin 3 and the respective pulleys 60 and 70. Because the first pin 3 makes a direct contribution to power transmission at the end faces 17, it is made of a high-strength material with excellent wear resistance, for example, bearing steel. Examples of such bearing steel include but is not limited to a SUJ2 material according to the Japan Industrial Standard.

Referring to FIG. 3 and FIG. 4, the second pin 4 (called also as a strip or an interpiece) is a second power transmission member made of the same material as the first pin 3 and extending long in the chain width direction W1.

The second pin 4 is formed shorter than the first pin 3 with respect to the chain width direction W1 to prevent a pair of the end portions thereof from coming into contact with the sheave surfaces of the respective pulleys. The second pin 4 is disposed ahead in the chain travel direction X1 with respect to the first pin 3 which is the counterpart of the pair. The second pin 4 is made thinner than the first pin 3 with respect to the chain travel direction X1.

The peripheral surface 18 of the second pin 4 extends in the chain width direction W1. The peripheral surface 18 has the rear portion 19 as the counter portion facing backwards in the chain travel direction X1. The rear portion 19 is orthogonal to the chain travel direction X1 and flat. As has been described, the rear portion 19 opposes the front portion 12 of the firs pin 3 as the counterpart of the pair.

The chain 1 is a so-called press-fit type chain. To be more concrete, the corresponding first pin 3 is fit into the front through-holes 9 in the respective link plates 2 in a relatively movable manner through loose-fit, whereas the second pin 4 making a pair with the first pin 3 is press-fit fixedly therein in a relatively immovable manner. Also, the corresponding first pin 3 is press-fit fixedly in the rear through-holes 10 in the respective plate links 2 in a relatively immovable manner, whereas the second pin 4 making a pair with the first pin 3 is fit therein in a relatively movable manner through loose-fit.

According to the configuration as described above, the front portion 12 of the first pin 3 and the rear portion 19 of the second pin 4 as the counterpart of the pair come into contact with each other on the contact portion T in association with the bending between the respective link plates 2 adjacent to each other in the chain travel direction X1. The contact in this instance is in a contact state that includes at least one of rolling contact and sliding contact.

The chain 1 has a predetermined alignment pitch P. The alignment pitch P is defined as a pitch between the adjacent first pins 3 of the chain 1 in the linear region. To be more concrete, it is a distance in the chain travel direction X1 between the contact portion T1 of the first and second pins 3 and 4 inside the front through-hole 9 in the link plate 2 and the contact portion T1 of the first and second pins 3 and 4 inside the rear through-hole 10 in the same link plate 2 of the chain 1 in the linear region. In this embodiment, the alignment pitch P is set, for example, to 8 mm.

When viewed along the chain width direction W1, of the front portion 12, a part that is allowed to come into contact with the rear portion 19 of the second pin 4 shapes an involute curve. Accordingly, when the adjacent link plates 2 bend with respect to each other, the corresponding first and second pins 3 and 4 are allowed to come into rolling contact smoothly with each other, which in turn allows the link plates 2 to bend smoothly with respect to each other. When the chain 1 is viewed along the chain width direction W1, movement locus of the contact portion T in this instance draw an involute curve.

The front portion 12 of the first pin 3 when viewed in the chain width direction W1 may shape a curve other than an involute curve. Examples of such a shape include a curve having one or more than one curvature radius.

The pillar portion 8 of the link plate 2 has a pair of side portions 20 and 21 that oppose each other in the chain travel direction X1. One side portion 20 is positioned relatively on the front side in the chain travel direction X1. This one side portion 20 is configured in such a manner so as not to interfere with a rolling motion of the first pin 3 loosely fit into the corresponding front through-hole 9 (with bending between the corresponding link plates 2).

Also, this one side portion 20 functions as a guide that limits further bending of the chain 1 by coming into contact with the corresponding first pin 3 when the bending angle between the corresponding link plates 2 reaches the maximum design bending angle.

The other side portion 21 is positioned relatively on the rear side in the chain travel direction X1. The other side portion 21 is configured in such a manner so as not to interfere with a rolling motion of the second pin 4 loosely fit into the corresponding rear through-hole 10 (with bending between the corresponding link plates 2).

In addition, the other side portion 21 functions as a guide that limits further bending of the chain 1 by coming into contact with the corresponding second pin 4 when the bending angle between the corresponding link plates 2 reaches the maximum design bending angle.

This embodiment is characterized in that the chain travel direction X1 can be discriminated when the link plate 2 is viewed along the chain width direction W1

To be more concrete, when the link plate 2 is viewed along the chain width direction W1, the link plate 2 is of an generally rectangular shape that is relatively long in the chain travel direction X1 and relatively short in the orthogonal direction V1, and includes four corners 31, 32, 33, and 34. First and second corners 31 and 32 are disposed at the front end in the chain travel direction X1, and third and fourth corners 33 and 34 are disposed at the rear end in the chain travel direction X1.

When the link plate 2 is viewed along the chain width direction W1, the link plate 2 includes a discrimination portion 22 to discriminate the chain travel direction X1. The discrimination portion 22 includes a small curvature radius portion 23 as a first circular arc portion and a large curvature radius portion 24 as a second circular arc portion provided to the first through fourth corners 31 through 34.

The small curvature radius portion 23 is provided to only one of the four corners 31 through 34 of the link plate 2 (the first corner 31 in this embodiment), and faces frontward in the chain travel direction X1. In other words, of the link plate 2, the side on which the small curvature radius portion 23 is present is the side that is to face frontward in the chain travel direction X1. A curvature radius r1 of the small curvature radius portion 23 is made smaller than a curvature radius r2 of the large curvature radius portions 24, and is set to a range, for example, of 0.2 to 2.0 mm.

When the curvature radius r1 is less than 0.2 mm, the small curvature radius portion 23 has an acute shape, which easily causes stress concentration. Conversely, when the radius curvature r1 exceeds 2.0 mm, the small curvature radius portion 23 becomes rounder, which makes it difficult to discriminate between the small curvature radius portion 23 and the large curvature radius potions 24. It is therefore preferable to set the curvature radius r1 to the range specified above.

The large curvature radius portion 24 is provided to each of the remaining three corners among the four corners 31 through 34 of the link plate 2 (the second through fourth corners 32 through 34 in this embodiment). As has been described, the curvature radius r2 of the large curvature radius portions 24 is set larger than the curvature radius r1 of the small curvature radius portion 23, and is set, for example, to 3.0 mm or greater. In other words, the curvature radius r2 of the large curvature radius portion 24 is set to at least 150% of the curvature radius r1 of the small curvature radius portion 23.

Alternatively, the curvature radii r2 of the respective large curvature radius portions 24 may be set to values different from one another.

Linear portions 26 are formed to a pair of the end portions of the small curvature radius portion 23 with respect to the circumferential direction of the outer peripheral portion 25 of the link plate 2. The linear portions 26 form a part of the outer peripheral portion 25 of the link plate 2 and are connected smoothly with the small curvature radius portion 23. By providing the linear portions 26, the small curvature radius portion 23 can be discriminated more readily.

According to this embodiment, the function and the effect as follows can be achieved. That is, by providing the discrimination portion 22 to the link plate 2, it is possible to discriminate the orientation of the link plate 2 with respect to the chain travel direction X1.

When the link plate 2 is viewed along the chain width direction W1, the link plate 2 is of a shape asymmetric with respect to the front and the rear in the chain travel direction X1. According to this configuration, although the orientation of the link plate 2 with respect to the chain travel direction X1 is determined, it is possible to discriminate the assemble direction of the link plates 2 due to such link plates 2. It is thus possible to prevent the link plates 2 from being assembled in a wrong orientation.

In addition, the travel direction of the chain 1 (rotation direction of the chain 1) can be discriminated by the discrimination portion 22. It is thus possible to prevent the chain 1 from being wound around the respective pulleys 60 and 70 in a wrong direction. For example, in a case where the link plates 2 are aligned and the coupling members 50 are inserted into the corresponding link plates 2 by a machine, it is possible to prevent an error when assembling the link plates 2.

In addition, by providing the small curvature radius portion 23 to the discrimination portion 22, it is possible to align the link plates 2 in the correct orientation with respect to the chain travel direction X1 in a reliable manner by a job as simple as pointing the small curvature radius portion 23 of the link plate 2 in the chain travel direction X1.

Further, the first pin 3 is loosely fit into the front through-hole 9 in the link plate 2 and the second pin 4 is press-fit fixedly therein, whereas the first pin 3 is press-fit fixedly in the rear through-hole 10 and the second pin 4 is loosely fit therein. Accordingly, when the end faces 17 of the first pin 3 come into contact with the corresponding sheave surfaces 62a and 63a or sheave surfaces 72a and 73a of the pulleys 60 and 70, respectively, the second pin 4 that makes a pair comes into contact with the first pin 3 in a contact state including at least one of rolling contact and the sliding contact, which allows the link plates 2 to bend with respect to each other.

In this instance, the sliding contact components can be lessened by increasing the mutual rolling contact components between the first and second pins 3 and 4 making a pair. Consequently, the end faces 17 of the first pin 3 are allowed to come into contact with the corresponding sheave surfaces 62a and 63a or sheave surfaces 72a and 73a while they hardly rotate. It is thus possible to ensure higher transmission efficiency by reducing a frictional loss.

In addition, when the link plates 2 that bend with respect to each other are viewed along the chain width direction W1, movement locus of the contact portion T of the corresponding first and second pins 3 and 4 draw an involute curve in reference to the first pin 3. It is thus possible to suppress the occurrence of a chordal action in the chain 1 when the first pins 3 are successively meshed with the pulleys 60 and 70. Consequently, noises while the chain 1 is driven can be reduced.

In this manner, it is possible to achieve the continuously variable transmission 100 excellent in transmission efficiency and silence, with which not only can the assemble direction of the link plates 2 be readily discriminated, but also the travel direction of the chain 1 can be readily discriminated.

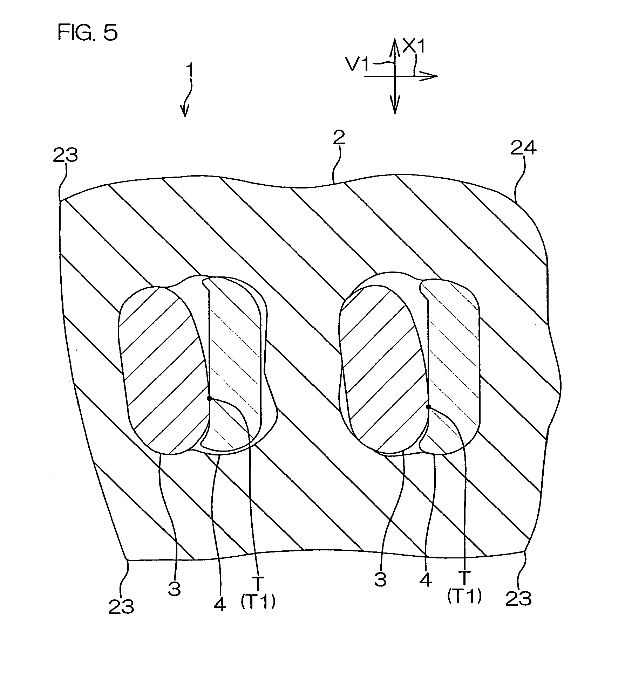

It may be configured in such a manner that the large curvature radius portion 24 is provided instead of the small curvature radius portion 23 of this embodiment and the small curvature radius portion 23 is provided instead of the large curvature radius portion 24. In this case, as is shown in FIG. 5, the small curvature radius portion 23 is provided to three points and the large curvature radius portion 24 is provided to one point.

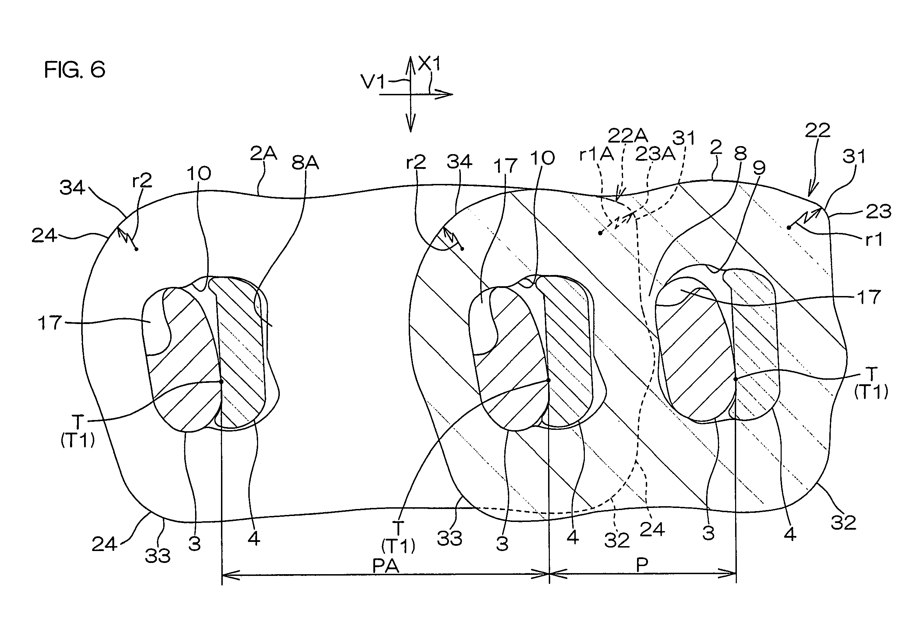

FIG. 6 is a partial section of a major portion in still another embodiment of the invention. In this embodiment, differences from the embodiment shown in FIG. 1 through FIG. 4 will be chiefly described. Like components are labeled with like reference characters and descriptions thereof are omitted herein.

Referring to FIG. 6, this embodiment is characterized in that plural types of link plates having different alignment pitches (specifications) in the linear region of the chain are provided so as to randomize engagement cycles in which the end faces 17 of the first pins 3 successively engage with the respective pulleys 60 and 70, and that the discrimination portion to discriminate the specification of the link plate is provided.

To be more concrete, as plural types of link plates having specifications different from each other, link plates 2 as a first type of link plates having a relatively short alignment pitch, and long link plates 2A as a second type of link plates having a relatively long alignment pitch are provided.

In the long link plate 2A, the length of a pillar portion 8A in the chain travel direction X1 is made longer than the length of the pillar portion 8 of the link plate 2 in the chain travel direction X1. Accordingly, an alignment pitch PA of the long link plates 2A is longer than the alignment pitch P of the link plates 2 (PA > P).

The link plates 2 and the long link plates 2A are aligned randomly in the chain travel direction X1. In this case, the phrase, "aligned randomly", means that at least one of the link plates 2 and the long link plates 2A are disposed on an irregular base at least in a partial region in the chain travel direction X1. The phrase, "on an irregular base", means that at least one of the periodicity and the regularity is absent.

The link plates 2 and the long link plates 2A may be aligned randomly in all the regions of the chain 1 in the chain travel direction X1.

As one example of such random alignment, there is a case where the link plates 2 and the long link plates 2A are aligned in the order of 2A, 2, 2, 2A, 2, 2, 2, 2A, 2, 2, 2, 2, 2, 2A, 2, 2, 2, 2, 2, 2, 2, ... with respect to the chain travel direction X1.

The link plates 2 and the long link plates 2A are provided with discrimination portions 22 and 22A, respectively. A curvature radius r1A of a small curvature radius portion 23A of the discrimination portion 22A of the long link plates 2A is made smaller than the curvature radius r1 of the small curvature radius portion 23 of the discrimination portion 22 of the link plates 2 (r1A < r1). This configuration makes it possible to discriminate between the link plates 2 and the long link plates 2A. In addition, it is possible to discriminate the orientations of the respective link plates 2 and long link plates 2A with respect to the chain travel direction X1.

Alternatively, the curvature radius r1A of the small curvature radius portion 23A of the discrimination portion 22A may be made larger than the curvature radius r1 of the small curvature radius portion 23 of the discrimination portion 22.

Further, the curvature radius r2 of the large curvature radius portion 24 may differ between the link plates 2 and the long link plates 2A.

According to this embodiment, the function and the effect as follows can be achieved. That is, by providing the discrimination portions 22 and 22A to the link plates 2 and the long link plates 2A, respectively, it is possible to discriminate the types of the link plates (between the link plates 2 and the long link plates 2A) with ease, which can prevent the link plates 2 from being assembled erroneously.

In addition, plural types of link plates 2 and 2A having different alignment pitches are provided, and these link plates 2 and 2A are aligned randomly. Accordingly, the engagement cycles of the chain 1 and the respective pulleys 60 and 70 while the chain 1 is driven can be randomized. It is thus possible to distribute the frequencies of engaging sounds of the chain 1 and the respective pulleys 60 and 70 over a wide range by randomizing the occurrence cycles of the engaging sounds, which can consequently reduce noises accompanying the driving of the chain 1.

Further, in the embodiment described above, the small curvature radius portions 23 and 23A may be provided to only any one of the second through fourth corners 32 through 34.

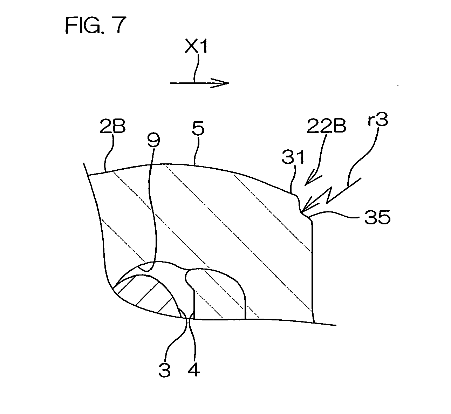

FIG. 7 is a section of a major portion in still another embodiment of the invention. In this embodiment, differences from the embodiment shown in FIG. 1 through FIG. 4 will be chiefly described. Like components are labeled with like reference characters and descriptions thereof are omitted herein.

This embodiment is characterized in that, as is shown in FIG. 7, a discrimination portion 22B is formed by providing a concave portion 35 instead of the small curvature radius portion 23 shown in FIG. 4.

The concave portion 35 is formed in only one of the four corners of the link plate (for example, in the first corner 31) as with the small curvature radius portion described above. A curvature radius r3 of the concave portion 35 is equal to the curvature radius r1 of the small curvature radius portion 23 (see FIG. 4).

According to this embodiment, it is possible to align link plates 2B in the correct orientation with respect to the chain travel direction X1 in a reliable manner by a job as simple as pointing the concave portion 35 in the chain travel direction X1.

In a case where plural types of link plates having different alignment pitches are used as plural types of link plates having specifications different from each other, it is possible to discriminate the type of link plates by changing the position and the shape of the discrimination portion 22B from one type of link plates to another.

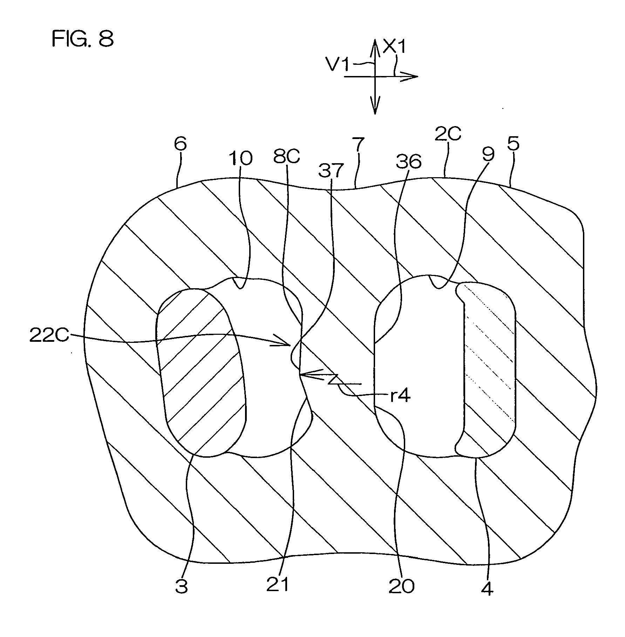

FIG. 8 is a section of a major portion in still another embodiment of the invention. In this embodiment, differences from the embodiment shown in FIG. 1 through FIG. 4 will be chiefly described. Like components are labeled with like reference characters and descriptions thereof are omitted herein.

Referring to FIG. 8, this embodiment is characterized in that, when a link plate 2C is viewed along the chain width direction W1, the link plate 2C includes a discrimination portion 22C to discriminate the chain travel direction X1, and that the discrimination portion 22C is disposed in a pair of the side portions 20 and 21 of a pillar portion 8C of the link plate 2C.

The discrimination portion 22C has a flat portion 36 provided to one side portion 20 and a mountain portion 37 provided to the other side portion 21. The flat portion 36 extends linearly generally in parallel with the orthogonal direction V1. The mountain portion 37 is formed by allowing the intermediate portion of the other side portion 21 with respect to the orthogonal direction V1 to protrude in a direction opposite to the chain travel direction X1, and it is in the form of a mountain when viewed along the chain width direction W1.

A curvature radius r4 of the mountain portion 37 is set, for example, to a range of 0.3 mm to 2.0 mm. When the curvature radius r4 of the mountain portion 37 is less than the lower limit specified above, the mountain portion 37 has an acute shape, which easily causes stress concentration. Conversely, when the curvature radius r4 is larger than the upper limit specified above, the mountain portion 37 becomes rounder, which makes it difficult to discriminate between the flat portion 36 and the mountain portion 37. It is therefore preferable to set the curvature radius r4 to the range specified above. According to the configuration described above, the shapes of the pair of side portions 20 and 21 of the pillar portion 8C become different from each other.

According to this embodiment, by providing the discrimination portion 22C to the pillar portion 8C positioned between the front through-hole 9 and the rear through-hole 10, it is possible to make the position of the discrimination portion 22C easy to be recognized so that it can be readily found. In addition, while the chain is driven, the link plates 2C undergo a tensile force induced by the first and second pins 3 and 4 (the coupling members 50) inserted through the respective front through-holes 9 and rear through-holes 10. However, a load from the first and second pins 3 and 4 will not directly act on the pillar portions 8C of the link plates 2C. Accordingly, stress developed in the pillar portion 8C is small in comparison with the other portions of the link plate 2C. Hence, even when the discrimination portion 22C is formed by changing the shape of the pillar portion 8C, the durability of the link plate 2C will not be deteriorated.

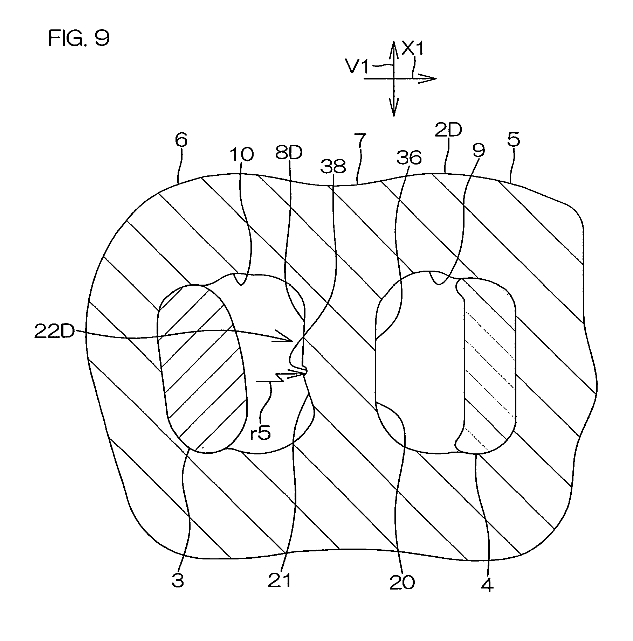

Alternatively, as is shown in FIG. 9, a recess portion 38 may be provided instead of the mountain portion 37 of FIG. 8. It is preferable to set a curvature radius r5 of the recess portion 38 to a numerical range same as that of the radius curvature r4 of the mountain portion 37 of FIG. 8.

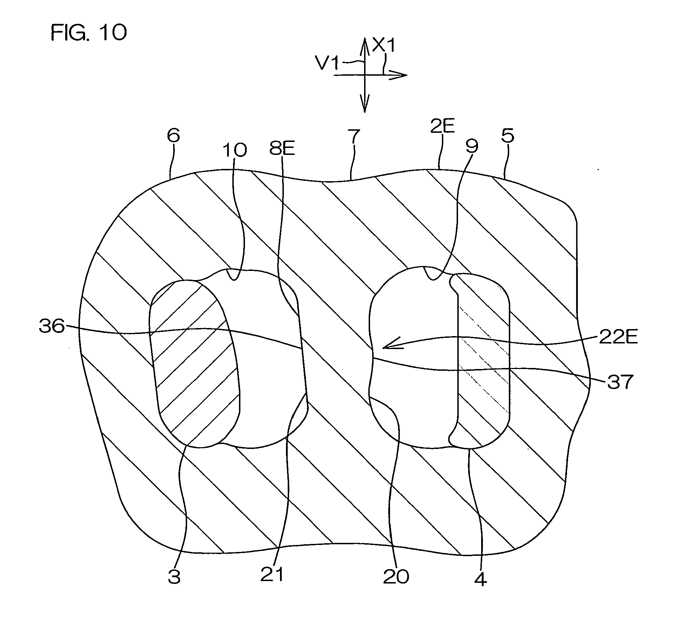

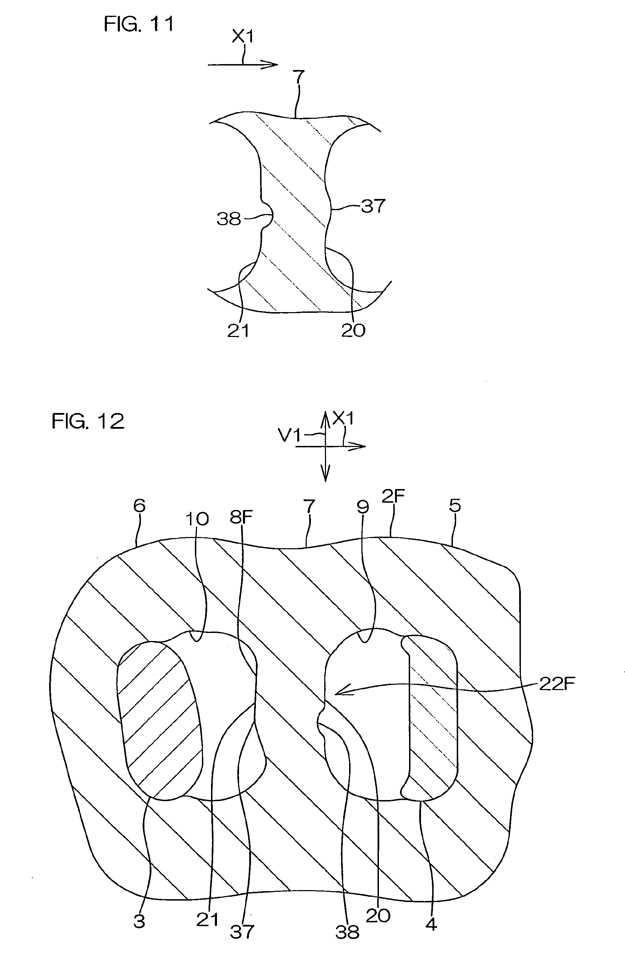

Further, as is shown in FIG. 10, it may be configured in such a manner that the mountain portion 37 is provided to the one side portion 20 and the flat portion 36 to the other side portion 21. Moreover, as is shown in FIG. 11, it may be configured in such a manner that the mountain portion 37 is provided to the one side portion 20 and the recess portion 38 to the other side portion 21.

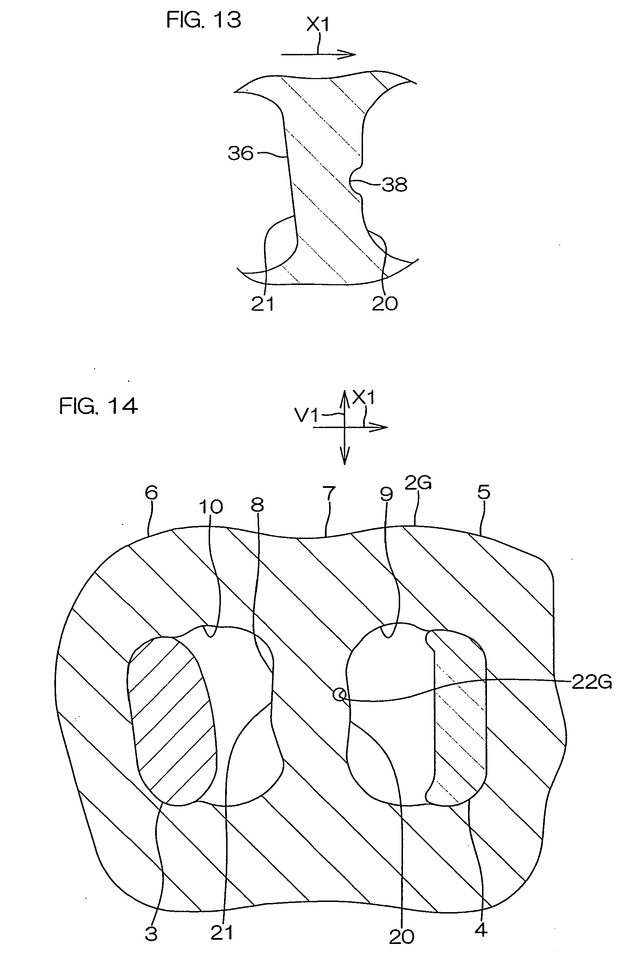

In addition, as is shown in FIG. 12, it may be configured in such a manner that the recess portion 38 is provided to the one side surface 20 and the mountain portion 37 to the other side portion 21. Further, as is shown in FIG. 13, it may be configured in such a manner that the recess portion 38 is provided to the one side portion 20 and the flat portion 36 to the other side portion 21.

In a case where plural types of link plates having different alignment pitches are used as plural types of link plates having specifications different from each other, it is possible to discriminate the type of link plates by changing the shapes of the one side portion and the other side portion of the pillar portion from one type of link plates to another.

FIG. 14 is a section of a major portion in still another embodiment of the invention. In this embodiment, differences from the embodiment shown in FIG. 1 through FIG. 4 will be chiefly described. Like components are labeled with like reference characters and descriptions thereof are omitted herein.

Referring to FIG. 14, this embodiment is characterized in that, when a link plate 2G is viewed along the chain width direction W1, the link plate 2G includes a discrimination portion 22G to discriminate the chain travel direction X1. When the link plate 2G is viewed along the chain width direction W1, the discrimination portion 22G includes a punching hole which is a concave portion as a marker provided to the front surface of the pillar portion 8.

The discrimination portion 22G is formed when molding the link plate 2G by pressing a material (steel plate or the like) of the link plate 2G. The discrimination portion 22G is formed on the pillar portion 8 on the front side with respect to the chain travel direction X1. When the link plate 2G is viewed along the chain width direction W1, the center of the discrimination portion 22G with respect to the chain travel direction X1 is disposed so as to avoid the center of the pillar portion 8 with respect to the chain travel direction X1. In the pillar portion 8, the shape on the periphery of the one side portion 20 and the shape on the periphery of the other side portion 21 are different from each other.

According to this embodiment, the discrimination portion 22G is provided to the pillar portion 8 positioned between the front through-hole 9 and the rear through-hole 10. This configuration makes the position of the discrimination portion 22G easy to be recognized so that it can be readily found. The chain travel direction X1 can be readily discriminated according to the shape of the pillar portion 8.

In the respective embodiments shown in FIG. 8 through FIG. 14, even when the respective shapes of the pair of side portions 20 and 21 of the pillar portion are symmetrical with respect to the front and the rear in the chain travel direction X1, it is still possible to discriminate the chain travel direction X1 by providing the discrimination portion 22G.

The discrimination portion 22G may be formed on the rear side of the pillar portion 8 with respect to the chain travel direction X1. Also, a plurality of discrimination portions 22G may be provided. Further, in a case where plural types of link plates having different alignment pitches are used as plural types of link plates having specifications different from each other, it is possible to discriminate the type of link plates by changing the position, the size, and the shape of the discrimination portion 22G from one type of link plates to another.

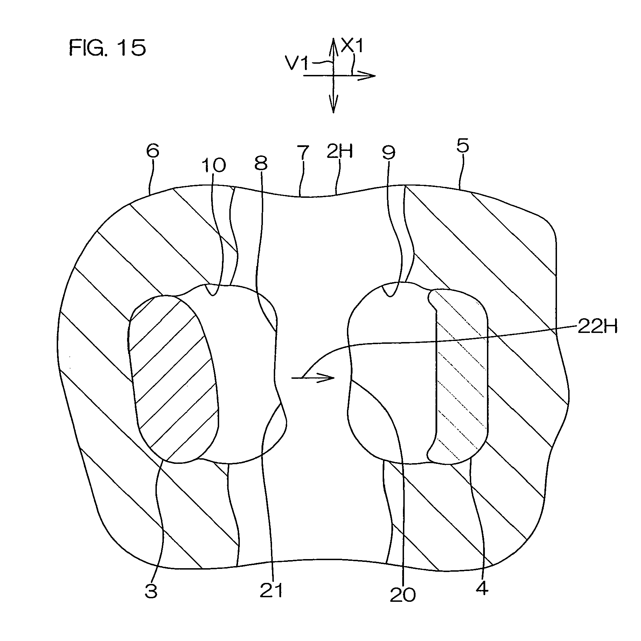

FIG. 15 is a partial section of a major portion in still another embodiment of the invention. In this embodiment, differences from the embodiment shown in FIG. 1 through FIG. 4 will be chiefly described. Like components are labeled with like reference characters and descriptions thereof are omitted herein.

Referring to FIG. 15, this embodiment is characterized in that, when a link plate 2H is viewed along the chain width direction W1, the link plate 2H includes a discrimination portion 22H to discriminate the chain travel direction X1. When the link plate 2H is viewed along the chain width direction W1, the discrimination portion 22H includes a symbol as a marker provided to the front surface of the pillar portion 8 of the link plate 2H.

The discrimination portion 22H includes, for example, an arrow symbol formed by irradiating a laser beam to the link plate 2H. This arrow symbol indicates the chain travel direction X1.

According to this embodiment, the discrimination portion 22H is provided to the pillar portion 8 positioned between the front through-hole 9 and the rear through-hole 10. This configuration makes the position of the discrimination portion 22H easy to be recognized so that it can be readily found.

In a case where plural types of link plates having different alignment pitches are used as plural types of link plates having specifications different from each other, it is possible to discriminate the type of link plates by changing the position, the shape, and the size of the discrimination portion 22H from one type of link plates to another.

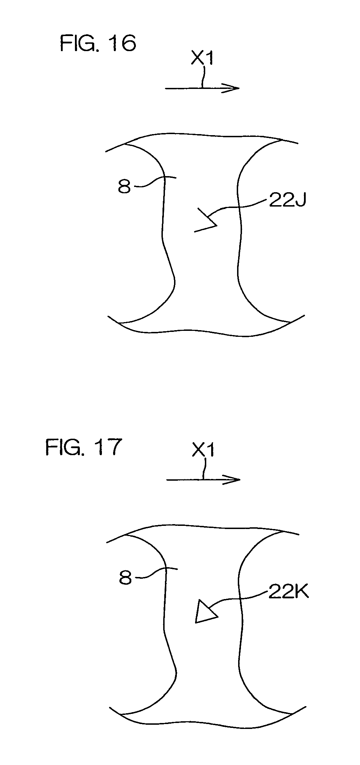

In this embodiment, as is shown in FIG. 16, it may be configured in such a manner that, instead of the arrow symbol described above, a symbol in the shape of an inequality sign is provided to the surface of the pillar portion 8 when viewed in the chain width direction W1 and used as a discrimination portion 22J indicating the chain travel direction X1. Alternatively, it may be configured in such a manner that, instead of the arrow symbol described above, a triangle symbol is provided to the surface of the pillar portion 8 when viewed from the chain width direction W1 as is shown in FIG. 17 and used as a discrimination portion 22K indicating the chain travel direction X1.

In the respective embodiments above, the first pin 3 may be loosely fit into the corresponding rear through-holes 10. Also, the second pin 4 may be loosely fit into the corresponding front through-holes 9. Further, the second pin 4 may be engaged with the respective pulleys 60 and 70.

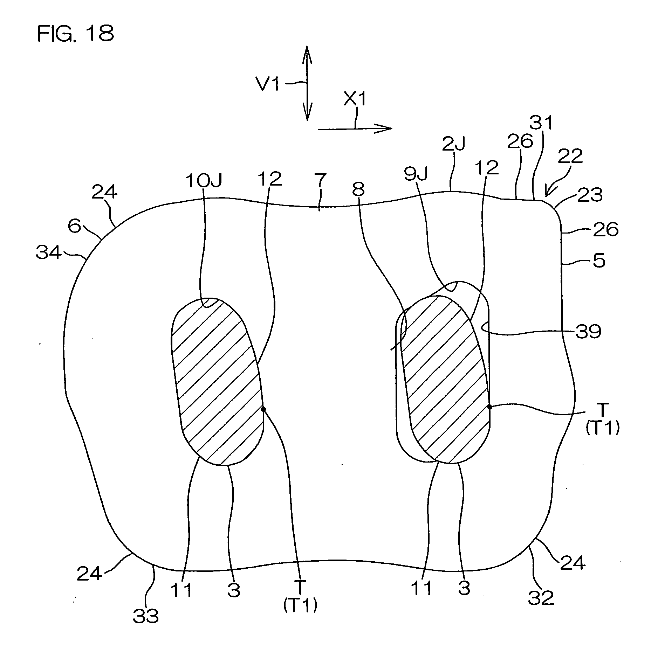

FIG. 18 is a partial section of a major portion in still another embodiment of the invention. In this embodiment, differences from the embodiment shown in FIG. 1 through FIG. 4 will be chiefly described. Like components are labeled with like reference characters and descriptions thereof are omitted herein.

Referring to FIG. 18, this embodiment is characterized in that respective link plates 2J adjacent to each other in the chain travel direction X1 are coupled so that they can bend with respect to each other, using the single first pins 3 as the coupling members. To be more concrete, a corresponding first pin 3 is loosely fit into front through-holes 9J in the respective link plates 2J in a relatively movable manner, whereas another corresponding first pin 3 is press-fit fixedly into rear through-holes 10J in the respective link plates 2J.

Of the peripheral portion of the front through-hole 9J, the section of a front portion 39 (counter portion) positioned on the front side with respect to the chain travel direction X1 is of a linear shape extending generally straight in the orthogonal direction V1. The front portion 39 opposes the front portion 12 of the first pin 3 loosely fit into the front through-holes 9J. The front portion 12 of the first pin 3 and the front portion 39 come into contact with each other at the contact portion T in a contact state including at least one of rolling contact and sliding contact.

Accordingly, the link plate 2J and the first pin 3 loosely fit into this link plate 2J come into rolling and sliding contact with each other in association with the bending of the link plates 2J with respect to each other. Also, when the first pin 3 is viewed along the chain width direction W1, the movement locus of the contact portion T in association with the bending between the link plates 2J draw an involute curve in reference to the first pin 3.

According to this embodiment, it is possible to make the alignment pitch between the first pins 3 shorter, which makes it possible to provide more first pins 3 to be meshed with the respective pulleys at a time. Accordingly, a load per first pin 3 can be reduced. It is thus possible to reduce colliding forces with the respective pulleys, which can in turn reduce noises.

In a case where plural types of link plates having different alignment pitches are used as plural types of link plates having specifications different from each other, it is possible to discriminate the type of link plates by changing the position and the shape of the discrimination portion 22 from one type of link plates to another.

Further, any one of the discrimination portions 22A through 22H, 22J, and 22K may be provided instead of the discrimination portion 22. Furthermore, the first pin 3 may be loosely fit into the rear through-holes 10J in the respective link plates 2J.

While the embodiments of the invention have been described, it should be appreciated that the invention is not limited to the embodiments above. For example, in the respective embodiments shown in FIG. 8 through FIG. 13, it may be configured in such a manner that the discrimination portion is provided to only one of the pair of side portions 20 and 21 of the pillar portion, so that the pillar portion of the link plate is of a shape asymmetric with respect to the front and the rear in the chain travel direction X1.

In the respective embodiments above, a lot symbol may be inscribed on the surface of the link plate 2, so that this lot symbol is used as the discrimination portion by disposing the lot symbol on the pillar portion of the link plate at a position closer to either the front through-hole or the rear through-hole.

The discrimination portions of the respective embodiments can be discriminated by an individual visually or by various types of discrimination devices. For example, by imaging the link plate with a camera to capture the image and apply image processing thereon, automatic discrimination is enabled swiftly in a reliable manner. This is suitable for automating the fabrication of chains. For example, the discrimination is enabled using a sensor that utilizes optical, electrical, or acoustic actions.

In addition, the invention may be applied to a so-called block-type power transmission chain, in which members having power transmission portions same as the end faces of the first pins are provided in the vicinity of a pair of the end portions of the first pin. The block-type power transmission chain includes power transmission blocks, and the power transmission blocks are fixed to the link plates or the pins so as to protrude toward the both ends in the chain width direction W1 with respect to the pins.

The shapes of the front through-hole and the rear through-holes of the link plate may be changed with each other. Further, a connecting groove (slit) may be provided to the pillar portion between the front through-hole and the rear through-hole in the link plate. In this case, an amount of elastic deformation (flexibility) of the link plate can be increased, and stress developing in the link plate can be reduced further.

It should also be noted that the invention is not limited to the configuration in which the groove widths of both the drive pulley 60 and the driven pulley 70 are variable, and it may configured in such a manner that the groove width of either one of the pulleys is variable whereas the groove width of the other is fixed. Further, the above described are the embodiments in which the groove widths vary continuously (in a stepless manner). However, the invention may be applied to other power transmission devices in which the groove widths are varied step-wise or are fixed (invariable).

While the embodiments of the invention have been described in detail, modifications, alterations and equivalents of the invention will readily occur to anyone skilled in the art who understands the contents. The sprit and the scope of the invention, therefore, are limited solely by the scope and equivalents of the appended claims.

This application corresponds to the prior Japanese Patent Application No. 2005-301031 filed with the Japanese Patent Office on October 14, 2005, the entire contents of which are incorporated herein by reference.

## Claims

1. A power transmission chain, comprising:
a plurality of link plates aligned in a chain travel direction; and
a plurality of coupling members that extend in a chain width direction orthogonal to the chain travel direction and couple the plurality of link plates one with another,
wherein, when the link plates are viewed along the chain width direction, each of the link plates has a discrimination portion to discriminate the chain travel direction.

2. The power transmission chain according to claim 1, wherein:
when the link plates are viewed along the chain width direction, each of the link plates has four corners; and
each of the discrimination portions includes a first circular arc portion provided to one of the four corners of a corresponding link plate and second circular arc portions provided to remaining three out of the four corners of the corresponding link plate, and a curvature radius of the first circular arc portion and a curvature radius of the second circular arc portions are different from each other.

3. The power transmission chain according to claim 2, wherein:
the curvature radius of the first circular arc portion is relatively small and the curvature radius of the second circular arc portions is relatively large.

4. The power transmission chain according to claim 3, wherein:
the curvature radius of the second circular arc portions is at least 150% of the curvature radius of the first circular arc portion.

5. The power transmission chain according to claim 1, wherein:
when the link plates are viewed along the chain width direction, each of the link plates has four corners; and
each of the discrimination portions includes a concave portion provided to only one of the four corners of a corresponding link plate.

6. The power transmission chain according to claim 1, wherein:
each of the link plates includes a first through-hole and a second through-hole aligned in the chain travel direction, and a pillar portion as a partition between the first through-hole and the second through-hole;
the coupling members are inserted into the respective first through-holes and second through-holes; and
each of the discrimination portions is provided to the pillar portion of the corresponding link plate.

7. The power transmission chain according to claim 6, wherein:
each of the discrimination portions is formed at least one of a pair of side portions of the pillar portion of a corresponding link plate.

8. The power transmission chain according to claim 7, wherein:
shapes of the pair of side portions of the pillar portion are different from each other.

9. The power transmission chain according to claim 6, wherein:
when the corresponding link plate is viewed along the chain width direction, the discrimination portion includes a marker formed on a front surface of the pillar portion of the corresponding link plate.

10. The power transmission chain according to claim 9, wherein:
the marker includes a concave portion, and a center of the concave portion with respect to the chain travel direction is disposed so as to avoid a center of the pillar portion with respect to the chain travel direction.

11. The power transmission chain according to claim 9, wherein:
the marker includes a symbol that indicates the chain travel direction.

12. The power transmission chain according to claim 1, wherein:
the plurality of link plates include a plurality of types of link plates having specifications different from each other, and the plurality of types of the link plates include discrimination portions to discriminate the respective specifications.

13. The power transmission chain according to claim 12, wherein:
each of the link plates includes a first through-hole and a second through-hole aligned in the chain travel direction;
corresponding coupling members are inserted into the respective first through-holes and second through-holes;
each of the corresponding coupling members has power transmission members that engage with sheave surfaces of pulleys;
the plurality of types of the link plates include link plates of a first type in which an alignment pitch of the corresponding power transmission members is relatively short and link plates of a second type in which an alignment pitch of the corresponding power transmission members is relatively long; and
at least one of the link plates of the first type and the link plates of the second type are aligned randomly at least in a partial region in the chain travel direction.

14. The power transmission chain according to claim 1, wherein:
each of the link plates includes a first through-hole and a second through-hole aligned in the chain travel direction;
the coupling members are inserted into corresponding first through-hole and second through-hole respectively;
each of the coupling members includes first and second power transmission members;
the corresponding first power transmission member is fit into the first through-hole of each link plate in a relatively movable manner and the corresponding second power transmission member is fit therein in a relatively immovable manner; and
the corresponding second power transmission member is fit into the second through-hole of each link plate in a relatively movable manner and the corresponding first power transmission member is fit therein in a relatively immovable manner.

15. The power transmission chain according to claim 1, wherein:
each of the link plates includes a first through-hole and a second through-hole aligned in the chain travel direction;
the coupling members are inserted into corresponding first through-hole and second through-hole respectively;
each of the coupling members includes first and second power transmission members that come into contact with each other in a contact state including at least one of rolling contact and sliding contact; and
movement locus of a contact portion between the first and second power transmission members in association with bending between the respective link plates draw an involute curve when viewed along in the chain width direction.

16. A power transmission device, comprising:
a pair of pulleys each having a pair of mutually opposed sheave surfaces in a form of a circular conical surface,
wherein power is transmitted between the pair of pulleys via the power transmission chain set forth in any one of claims 1 through 15.
